# EUROPEAN PATENT APPLICATION

(11) **EP 4 663 619 A1**
(43) Date of publication of application: **17.12.2025**
(21) Application number: 24182129.7
(22) Date of filing: 13.06.2024
(51) Int. Cl.: C04B 28/06, C04B 40/00, C04B 103/30

(54) **ADMIXTURES TO IMPROVE THE WORKABILITY OF CONSTRUCTION COMPOSITIONS COMPRISING CALCIUM SULFOALUMINATE CEMENT**

(71) Applicant: Sika Technology AG, 6340 Baar (CH)
(72) Inventor: Nekwapil, Jan, 69231 Rauenberg (DE); Heller, Thomas, 74939 Zuzenhausen (DE); Müller, Thomas, 69207 Sandhausen (DE)
(74) Representative: Sika Patent Attorneys

(57) **Abstract**

The present invention relates to admixtures comprising at least one sulfonated cement dispersant D and at least one set retarder S selected from the group consisting of calcium complexing agents. The present invention also relates to the use of such admixtures for calcium sulfoaluminate cement or for construction compositions comprising calcium sulfoaluminate cement.

## Description

### Technical Field

The present invention relates to admixtures and their use in particular for construction compositions comprising calcium sulfoaluminate cement. The admixtures of the present invention comprise at least one sulfonated cement dispersant and at least one set retarder selected from the group consisting of calcium complexing agents.

### Background of the invention

Construction compositions still typically are based on Ordinary Portland cement (OPC). Such cements are described in standard EN 197-1. During production of OPC high energy consumption is encountered for sintering and milling and thus a substantial amount of CO₂ is released per ton of cement. Efforts from construction industry to reduce CO₂ emissions include the use of alternatives to OPC which are based on clinker requiring less energy for production. One such alternative are calcium sulfoaluminate (CSA) cements.

Construction compositions based on calcium sulfoaluminate cements are known for fast setting and high early strength. These properties are due to the fast hydration of ye'elemite, one of the major phases present in CSA cements.

Similar to construction compositions based on OPC cement, calcium sulfoaluminate cement based construction materials need to be modified with admixtures to improve their workability. Due to the different chemical composition of CSA cements as compared to OPC cement and due to their different hydration behavior, the same concepts cannot be transferred one to one from one system to the other. It is, for example, the case that workability improvers usually used with Ordinary Portland cement lead to significant retardation when used with calcium sulfoaluminate cements and thus compromise one of the desired properties of the latter.

On the other hand, it is desirable to regulate the reaction kinetics of CSA cement based construction compositions, especially their open time and early strength development. Various retarders or other kinetic regulators have been used for such effect. However, set retarders will also delay the development of early strength.

WO 2020/109186 A1 (Sika Technology AG) teaches a combination of gluconate with sulfonic acids that can increase the open time of a CSA cement based construction composition without unduly lowering the early strength or workability.

However, there remains a need for admixtures for construction compositions comprising calcium sulfoaluminate cement that can at the same time improve the workability and have at least no negative effect on the reaction kinetics. Especially early strength development should remain on an acceptable level.

### Summary of the invention

It is an objective of the present invention to provide admixtures that can improve the workability of calcium sulfoaluminate cement or construction compositions comprising calcium sulfoaluminate cement.

It has surprisingly been found that this objective is met by admixtures as claimed in claim 1.

In particular, it is possible by the present invention to improve the workability of calcium sulfoaluminate cement or construction compositions comprising calcium sulfoaluminate cement. At the same time the early strength is preserved at an acceptable level.

Early strength in particular relates to the compressive strength measured according to standard DIN EN 196-1:2016-11 or DIN EN 12390-3:2019-10 within a few hours after mixing with water, such as 6 hours after mixing with water.

In particular, the loss of workability, for example, the loss of flow table spread, over time is lower when an admixture of the present is used in a construction composition comprising calcium sulfoaluminate cement as compared to the same construction compositions comprising calcium sulfoaluminate cement and comprising a polycarboxylate ether instead of the admixture of the present invention. The workability can be determined as described in the following. In particular the flow table spread can be measured according to standard DIN EN 12350-5:2019-09.

Further aspects of the present invention are the subject matter of independent claims. Preferred embodiments are the subject matter of dependent claims.

### Detailed ways

In a first aspect the present invention relates to an admixture comprising at least one sulfonated cement dispersant **D** and at least one set retarder **S** selected from the group consisting of calcium complexing agents.

An admixture of the present invention may be provided as a mono-component admixture or as a multi-component, especially a two-component admixture.

A mono-component admixture contains all constituents of the admixture in one container. This has the advantage that a lower number of containers has to be foreseen and that no mistakes with relative dosages of constituents can occur.

A multi-component admixture contains the constituents of the admixture in multiple, preferably in two, spatially separated containers. A multi-component, especially two-component, admixture has the advantage that a ratio of individual components, and thereby constituents, may be easily adjusted according to specific requirements.

It is possible that an admixture of the present invention is in the form of a solid powder or is in the form of a dispersion or solution in solvent, preferably in water.

It is particularly preferred that an admixture of the present invention consists to an amount of at least 10 w%, preferably at least 25 w%, more preferably at least 50 w%, especially at least 66 w%, relative to the total weight of the admixture, of the at least one sulfonated cement dispersant **D** and the at least one set retarder **S.** In particular, an admixture of the present invention may additionally contain solvents, preferably water, fillers, extenders, defoamers, biocides, pigments, or mixtures thereof.

Sulfonated cement dispersants **D** of the present invention are polymeric substances comprising a plurality of sulfonate groups. The sulfonate groups may be in the form of the acid or in the form of a salt. Particularly preferred are salts of alkali metals or alkaline earth metals. The sulfonated cement dispersant **D** can be in the form of a powder, a liquid, a solution, or a dispersion. A solution or a dispersion preferably is an aqueous solution or aqueous dispersion.

According to embodiments, that the at least one sulfonated cement dispersant **D** is selected from poly(naphthalene sulfonates), poly(melamine sulfonates), polystyrene sulfonates, sulfonated phenolic resins, and sulfonated polycarboxylate ethers.

Preferred poly(naphthalene sulfonates) are condensates of naphthalene sulfonates and formaldehyde. For example, poly(naphthalene sulfonate) may have the following general structure (I): 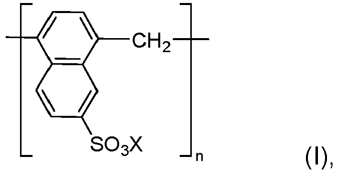 where X is H, alkali metal or alkaline earth metal, and n is an integer between 3 and 1000.

It is possible that individual monomeric units within a poly(naphthalene sulfonate) do not carry sulfonate groups. Poly(naphthalene sulfonates) may also exhibit random three dimensional features such as branching and/or crosslinking.

Preferred poly(melamine sulfonates) are condensates of melamine sulfonates and formaldehyde. For example, poly(melamine sulfonate) may have the following general structure (II): 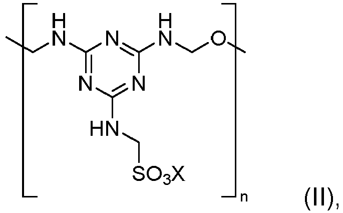 where X is H, alkali metal or alkaline earth metal, and n is an integer between 3 and 1000.

It is possible that individual monomeric units within a poly(melamine sulfonate) do not carry sulfonate groups. Poly(melamine sulfonates) may also exhibit random three dimensional features such as branching and/or crosslinking.

Preferred sulfonated polycarboxylate ethers comprise monomeric units of the following general structures (III), (IV), and (V): 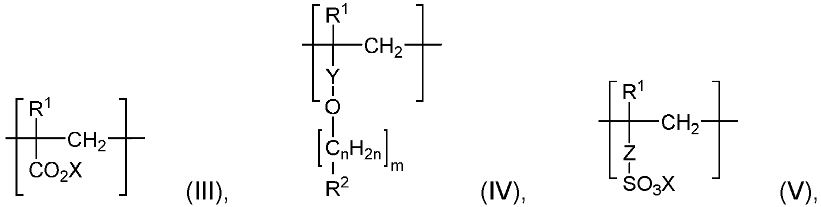 where R¹ is H or CH₃, R² is H or an alkyl chain having 1 to 8 carbon atoms; X is H, alkali metal or alkaline earth metal; Y is a chemical bond, a methylene group or an ethylene group; Z is a chemical bond or an alkylene group having 1-12 carbon atoms which can be substituted by oxygen or nitrogen atoms; n is an integer between 2 and 4; m is an integer between 2 and 250.

Monomeric units of general structure (III) are derived from (meth)acrylic acid.

Preferred monomeric units of general structure (IV) are derived from poly(alkylene oxide) monovinyl ether, poly(alkylene oxide) monoallyl ether, poly(alkylene oxide) monomethallyl ether, poly(alkylene oxide) monoisoprenyl ether, esters of (meth)acrylic acid and poly(alkylene oxide) monoalkyl ethers. The alkylene oxide especially is ethylene oxide, propylene oxide, butylene oxide, or mixtures thereof. It is, for example, possible that the first alkylene oxide is a butylene oxide and all further alkylene oxide groups are ethylene oxides. Different alkylene oxides preferably are arranged block-wise. In preferred embodiments, all alkylene oxides are ethylene oxides.

Preferred monomeric units of general structure (V) are derived from vinylsulfonic acid, 2-propene-1-sulfonic acid, 4-styrene sulfonic acid, amides of (meth)acrylic acid and sulfamic acid, amides of (meth)acrylic acid and sulfanilic acid, esters of (meth)acrylic acid and p-phenolsulfonic acid.

Monomeric units of the general structures (III), (IV), and (V) can be arranged statistically, block-wise, or with a gradient.

The sulfonated cement dispersant is not lignosulfonate.

According to embodiments, the at least one set retarder **S** is selected from the group consisting of sugar acids, sugars, sugar alcohols, low molecular weight carboxylic acids, hydroxycarboxylic acids, phosphates, phosphonates, borates, and amines.

A "sugar acid" in the context of the present invention is a monosaccharide with a carboxyl group. It may belong to any of the classes of aldonic acids, ulosonic acids, uronic acids or aldaric acids. Preferably, it is an aldonic acid. Examples for sugar acids useful in the context of the present invention include but are not limited to glyceric acid, xylonic acid, gluconic acid, ascorbic acid, neuraminic acid, glucuronic acid, galacturonic acid, iduronic acid, tartaric acid, mucic acid, and saccharic acid. The sugar acid may be present in form of the free acid or as a salt. According to embodiments, salts of sugar acids can be salts with metals of groups Ia, IIa, Ib, IIb, IVb, VIIIb of the periodic table of elements. Preferred salts of sugar acids are salts of alkali and alkali earth metals, iron, cobalt, copper, or zinc. Especially preferred are salts with monovalent metals such as lithium, sodium, and potassium. Particularly preferred are sodium and/or potassium salts of tartaric acid.

A "sugar" in the context of the present invention is a carbohydrate bearing an aldehyde group. In particularly preferred embodiments the sugar belongs to the group of monosaccharides or disaccharides. Examples of sugars include but are not limited to glycerinaldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose.

A "sugar alcohol" in the context of the present invention is a polyhydric alcohol derivable from sugars by a redox reaction. Sugar alcohols thus belong to the class of alditols. Examples for sugar alcohols include but are not limited to ethylene glycol, glycerol, diglycerol, threitol, erythritol, pentaerythritol, dipentaerythritol, xylitol, ribitol, arabitol, sorbitol, sorbitan, isosorbide, mannitol, dulcitol, fucitol, iditol, inositol, volemitol, lactitol, maltitol, isomalt, maltotriitol, maltotetraitol, and polyglycitol.

A "low molecular weight carboxylic acid" within the present invention is a carboxylic acid with a molecular weight of not more than 150 g/mol and not carrying any hydroxy groups. Examples for low molecular weight carboxylic acids are formic acid, acetic acid, propionic acid, oxalic acid, malonic acid, succinic acid, glutaric acid, adipic acid, fumaric acid, and maleic acid. The low molecular weight carboxylic acid may be present in form of the free acid or as a salt.

A "hydroxycarboxylic acid" in the context of the present invention is a carboxylic acid additionally comprising an OH-moiety within the same molecule. Examples for hydroxycarboxylic acids include but are not limited to malic acid, citric acid, isocitric acid, tartronic acid, mandelic acid, salicylic acid, and lactic acid. Ascorbic acid is also considered a hydroxycarboxylic acid within the present context. The hydroxycarboxylic acid may be present in form of the free acid or as a salt. According to embodiments, salts of hydroxycarboxylic acids can be salts with ammonium or with metals of groups Ia, IIa, Ib, IIb, IVb, VIIIb of the periodic table of elements. Preferred salts of hydroxycarboxylic acids are alkali metal salts, earth alkali metal salts or ammonium salts. Particularly preferred are sodium and/or potassium salts of citric acid.

A "phosphate" in the context of the present invention is a derivative of phosphoric acid. A phosphate can be the free phosphoric acid, an oligomer of phosphoric acid, and/or a polymer of phosphoric acid such as for example diphosphate, triphosphate, tetraphosphate and the like. Phosphates can be present in a protonated, partially deprotonated or fully deprotonated state. They can also be fluorinated. Examples of suitable phosphates are trisodium ortho-phosphate and, tetrasodium pyrophosphate, sodium hexametaphosphate, and disodium fluorophosphate. It is likewise possible that a "phosphate" refers to an ester of phosphoric acid or to an ester of one of its oligomers. Esters of phosphoric acids include but are not limited to mixed esters with the above mentioned hydroxycarboxylic acid and/or sugar acids, mixed esters with carboxylic acids, especially with fatty acids, alkylesters, arylesters, esters with polyalkylene glycols.

The term "phosphonate" likewise pertains to mono-, di-, tri-, tetra-, penta- or hexa-phosphonic acids, as well as oligomers and/or esters thereof. Preferably, phosphonates bear organofunctional moieties. Phosphonates can be present in a protonated, partially deprotonated or fully deprotonated state. Examples of suitable phosphonates are 1-hydroxyethylidene-1,1-diphosphonic acid, 2-phosphonobutane-1,2,4-tricarboxylic acid, 3-aminopropylphosphonic acid, aminotri(methylenephosphonic acid), and diethylentriaminepenta(methylenephosphonic acid).

A "borate" within the context of the present invention preferably is boric acid, a salt of boric acid or borax.

An "amine" within the present context preferably is selected from alkanolamines. An amine within the present context can also be selected from polyamines which contain two or more amino groups. Useful alkanolamines are triethanolamine, diethanolisopropanolamine, ethanoldiisopropanolamine, isopropanolamine, diisopropanolamine, triisopropanolamine, N-methyldiisopropanolamine, N-methyldiethanolamine, tetrahydroxyethylethylenediamine, and tetrahydroxyiso-propylethylenediamine. Useful polyamines are aliphatic, cycloaliphatic, heterocyclic and/or aromatic polyamines. Especially useful polyamines are for example ethylenediamine, hexylenediamine, diethylenetriamine, triethylenetetramine, tetraethylenepentamine, isophoronediamine, polyaminoalcohols such as aminoethylethanolamine, tetra(hydroxyethyl)ethylenediamine, polyaminocarboxylates such as iminodisuccinic acid, ethylenediaminetetraacetic acid, ethylenediaminedisuccinic acid or polyaspartic acid, which can be present in form of the free acid or in form of their salts, especially in form of their sodium salts.

Especially preferable the at least one set retarder **S** is selected from lactic acid, tartaric acid, citric acid, mandelic acid, salicylic, malic acid, and/or ascorbic acid. Any of lactic acid, tartaric acid, citric acid, mandelic acid, salicylic, malic acid, and/or ascorbic acid can be in the fully protonated form or in the form of a salt, preferably a salt with an alkali metal or alkaline earth metal. Particularly preferred are sodium and/or potassium salts of tartaric acid or citric acid.

The set retarder **S** can be in the form of a powder, a liquid, a solution, or a dispersion. A solution or a dispersion preferably is an aqueous solution or aqueous dispersion.

According to embodiments, the weight ratio of the at least one sulfonated cement dispersant **D** to the at least one set retarder **S** is between 10:1 and 1:1, preferably between 10:1 and 1:1, more preferably between 10:1 and 2:1, still more preferably between 7:1 and 3:1, especially between 6:1 and 3:1.

It has been found that the slump keeping properties of an admixture of the present invention are lower when the weight ratio of at least one sulfonated cement dispersant **D** to the at least one set retarder **S** falls outside these ranges. It has also been found that a higher weight ratio of at least one sulfonated cement dispersant **D** to the at least one set retarder **S** leads to higher early strength.

In another aspect the present invention relates to the use of an admixture as described above to improve the workability of calcium sulfoaluminate cement or of a construction composition comprising calcium sulfoaluminate cement.

All features and embodiments as described above also apply to this aspect.

The term "improvement of the workability" means that the workability of calcium sulfoaluminate cement or of a construction composition comprising calcium sulfoaluminate cement comprising the admixture of the present invention is improved as compared to the same calcium sulfoaluminate cement or construction composition comprising calcium sulfoaluminate cement but without the admixture of the present invention. An improved workability means that the rheological parameters, especially the flow is improved. An improved workability in particular means that
- slump measured according to standard DIN EN 12350-2:2019-09 is higher, and/or
- flow table spread measured according to standard DIN EN 12350-5:2019-09 is higher, and/or
- slump flow measured according to standard DIN EN 12350-8:2019-09 is higher, and/or,
- slump keeping properties are higher, this means that the reduction over time of slump and/or flow table spread and/or slump flow as measured above is lower, and/or
- flow time measured according to standard DIN EN 12350-9:2010 is lower.

A calcium sulfoaluminate cement (CSA cement) of the present invention is a cement comprising C₄(A₃₋ₓFₓ)$ (C: CaO; A: Al₂O₃; F: Fe₂O₃; $: SO₃) where x is an integer of from 0-3. Especially, a CSA cement of the present invention comprises ye'elemite which is C₄A₃$. CSA cement of the present invention typically comprises further phases selected from belite (C₂S with C: CaO, S: SiO₂), ferrites (C₂F, C₂AF, C₄AF, with C: CaO; A: Al₂O₃; F: Fe₂O₃), ternesite (C₅S₂$ with C: CaO, S: SiO₂; $: SOs), calcium sulfate, and optionally aluminates (CA, C₃A, C₁₂A₇ with C: CaO; A: Al₂O₃).

A construction composition within the present context comprises calcium sulfoaluminate cement, an admixture of the present invention, optionally other binders, and typically further comprises aggregates, fillers, optionally other admixtures, and optionally water.

According to embodiments, the admixture of the present invention is dosed in an amount to yield a weight ratio of 0.01 - 10 w%, preferably 0.1 - 5 w%, more preferably 0.2 - 2 w%, of the at least one sulfonated cement dispersant D, and of 0.005 - 1.5 w%, preferably 0.01 - 1 w% of the at least one set retarder S, in each case relative to the total dry weight of the calcium sulfoaluminate cement.

In another aspect, the present invention relates to a construction composition comprising calcium sulfoaluminate cement and comprising an admixture as described above.

All features and embodiments as described above also apply to this aspect.

In particular, the construction composition comprises the at least one sulfonated cement dispersant **D** in an amount of between 0.01 - 10 w%, preferably 0.1 - 5 w%, more preferably 0.2 - 2 w%, and the at least one set retarder **S** in an amount of 0.005 - 1.5 w%, preferably 0.01 - 1 w%, in each case relative to the total dry weight of the calcium sulfoaluminate cement.

The construction composition may further comprise other binders, aggregates, fillers, optionally other admixtures, and optionally water.

Other binders can be other cements, especially Portland cements of type CEM I, CEM II, CEM III, CEM IV, and CEM V as described in standard EN 197-1:2011. Other binders can also be other mineral binders such as gypsum or lime, pozzolanic or latent hydraulic binders, such as reactive slag, silica fume, fly ash pumice, rice husk, or trass, or organic binders such as epoxy resins or polyurethane resins. Lime is meant to encompass natural hydraulic lime, formulated lime, hydraulic lime, and air lime as described in the standard EN 459-1:2015.

Aggregates can be any material that is non-reactive in the hydration reaction of hydraulic binders. Aggregates can be any aggregate typically used for construction materials. Typical aggregates are for example rock, crushed stone, crushed concrete, gravel, sand, especially quartz sand, river sand and/or manufactured sand, quarry wastes, bio sourced aggregates such as hemp or sunflower.

Fillers are characterized by a small particle size. Especially, fillers are selected from fine calcium carbonate, ground limestone, ground dolomite, and/or ground aluminum oxide, and/or non-reactive slags.

Other admixtures are admixtures different from the at least one sulfonated cement dispersant **D,** and at least one set retarder **S** selected from the group consisting of calcium complexing agents. Other admixtures can be, for example, thickeners, accelerators, water retaining agents, biocides, pigments, fibers, air entraining agents, defoamers, shrinkage reducing agents.

A construction composition can be a dry composition. This means that no mixing water has been added to the composition. For example, the water content in a dry composition can be lower than 5 w%, preferably lower than 1 w%, relative to the total dry weight of the construction composition. An example for a dry construction composition is a dry mortar.

A construction composition can also be a wet composition. This means that water, typically mixing water, is present. For example, water can be present in a weight ratio of water to cement between 0.1 - 1.0. An example of a wet composition is wet concrete.

According to embodiments, an admixture of the present invention is admixed to calcium sulfoaluminate cement or to a construction composition comprising calcium sulfoaluminate cement. It is possible to admix the admixture of the present invention to a dry construction composition comprising calcium sulfoaluminate cement. This is in particular relevant in the manufacture of dry mortars. In such case, it is generally beneficial that the admixture is in the form of a solid powder and/or contains now or little water. It is also possible to admix the admixture of the present invention to a construction composition together with the mixing water or shortly thereafter. This is particularly relevant in the manufacture of concrete. In such case, the admixture can be in the form of a solid powder, in the form of a liquid, or in the form of a solution or dispersion in water.

In another aspect the present invention relates to a construction method comprising the steps of
(i) providing a construction composition comprising calcium sulfoaluminate cement, at least one sulfonated cement dispersant **D,** and at least one set retarder **S** selected from the group consisting of calcium complexing agents, and
(ii) casting the construction composition provided in step (i) to form a construction element.

All features and embodiments as described above also apply to this aspect.

In particular, in a construction method of the present invention the at least one sulfonated cement dispersant **D** is selected from poly(naphthalene sulfonates), poly(melamine sulfonates), polystyrene sulfonates, sulfonated phenolic resins, and sulfonated polycarboxylate ethers.

In particular, in a construction method of the present invention the at least one set retarder **S** is selected from the group consisting of sugar acids, sugars, sugar alcohols, low molecular weight carboxylic acids, hydroxycarboxylic acids, phosphates, phosphonates, borates, and amines.

Preferably, the casting in step (ii) is done at a surrounding temperature of not more than 35 °C, preferably is done at a surrounding temperature of between 0 - 35 °C, more preferably 5 - 30 °C, still more preferably 10 - 27 °C.

It has been found that a good early strength of construction composition comprising calcium sulfoaluminate cement can be obtained at such temperature.

According to embodiments, the construction composition provided in step (i) of a method of the present invention is a calcium sulfoaluminate cement obtained by intergrinding calcium sulfoaluminate clinker with at least one sulfonated cement dispersant **D** and at least one set retarder **S** selected from the group consisting of calcium complexing agents.

According to further embodiments, the construction composition provided in step (i) of a method of the present invention is a cement, mortar, or concrete obtained by admixing at least one sulfonated cement dispersant **D** and at least one set retarder **S** selected from the group consisting of calcium complexing agents to calcium sulfoaluminate cement or to a construction composition comprising calcium sulfoaluminate cement.

Casting can be done by any means known to the skilled person. For example, casting can be done by way of pouring into a mold or onto a substrate, by brushing, by trowelling, by spraying, or by 3D printing.

In another aspect, the present invention relates to a construction element obtained by curing a construction composition as described above or obtained by a construction method as described above.

Curing is not particularly limited. Curing especially is done at temperatures above 5 °C. Curing at hot temperatures is possible, for example by steam curing. It can be preferred to cure at temperatures of not higher than 35 °C. Preferably, curing is done at ambient pressure such as 1013 mbar. It is, however, also possible to cure at lower or higher pressure. Curing aids can be applied as needed.

A construction element can be a precast element, a building, or part of a building such as a wall, a floor, a ceiling, a render, a screed, or a cementitious adhesive.

### Examples

Test samples were prepared by first preparing an aggregate mixture of 9.76 kg of sand (0 - 2 mm), 8.27 kg of gravel (2 - 8 mm), and 9.76 kg of gravel (8 - 16 mm). 27.8 kg of the aggregate mixture were mixed for 30 s with 1.2 kg of water. The resulting mix was allowed to set for 120 s. Then 5.7 kg of calcium sulfoaluminate cement were added together with another 1.2 kg of mixing water and mixing as continued for 60 seconds. The respective admixtures in the amount as indicated in below table 1 (in w% relative to calcium sulfoaluminate cement) was then added and mixing continued for another 60 s.

Flow table spread was measured according to standard DIN EN 12350-5:2019-09 after the time indicated in below table 1.

Compressive strength (C.S.) was measured according to standard DIN EN 12390-3:2019-10 on cubes with 150 mm length after the time indicated in below table 1.

**Table 1: Examples 1 - 3 (not inventive) and 4 - 8 (inventive)**

| **Example** | **1*** | **2** | **3** | **4** |
|---|---|---|---|---|
| sulfonated cement dispersant **D** | | | 0.64 w% poly(naphthalene sulfonate) | 0.6 w% poly(naphthalene sulfonate) |
| set retarder **S** | | 0.25 w% tartaric acid | | 0.2 w% tartaric acid |
| Polycarboxylate ether | 0.1 w% | 0.14 w% | | |
| Slump @ 3 min [mm] | 590 | 530 | 610 | 610 |
| Slump @ 30 min [mm] | 340 | 570 | 390 | 590 |
| Slump @ 60 min [mm] | n.m. | n.m. | n.m. | 520 |
| C.S. @ 6h [MPa] | 31.9 | 8.9 | 25.2 | 23.2 |

| | | | | |
|---|---|---|---|---|
| n.m.: not measurable n.d.: not determined | | | | |

**Table 1 continued**

| **Example** | **5** | **6** | **7** |
|---|---|---|---|
| sulfonated cement dispersant **D** | 0.48 w% poly(naphthalene sulfonate) | 0.6 w% poly(naphthalene sulfonate) | 0.6 w% poly(naphthalene sulfonate) |
| set retarder **S** | 0.2 w% tartaric acid | 0.12 w% tartaric acid | 0.08 w% tartaric acid |
| Slump @ 3 min [mm] | 570 | 590 | 600 |
| Slump @ 30 min [mm] | 550 | 580 | 580 |
| Slump @ 60 min [mm] | 480 | 520 | 470 |
| C.S. @ 6h [MPa] | 17.1 | 24.3 | 24.9 |

**Table 1 continued**

| **Example** | **8** |
|---|---|
| sulfonated cement dispersant **D** | 0.6 w% |
| | 1:1 mixture of poly(naphthalene sulfonate) and poly(melamine sulfonate) |
| set retarder **S** | 0.12 w% |
| | tartaric acid |
| Slump @ 3 min [mm] | 570 |
| Slump @ 30 min [mm] | 570 |
| Slump @ 60 min [mm] | 470 |
| C.S. @ 6h [MPa] | 23.8 |

It can be seen from the above results that admixtures according to the invention lead to very good workability. In particular, the workability is improved over a composition having only polycarboxylate ether plasticizer (PCE) or having a mixture of PCE and retarder **S.** The workability is also improved over a composition having only the sulfonated dispersant **D.** At the same time the early strength remains on an acceptable level (where a 6h compressive strength of > 20 MPa was targeted in the above examples). This is surprising and is in sharp contrast to a combination of PCE and set retarder **S** which led to significant reduction of early strength.

## Claims

1. An admixture comprising at least one sulfonated cement dispersant **D** and at least one set retarder **S** selected from the group consisting of calcium complexing agents.

2. The admixture as claimed in claim 1, **characterized in that** the at least one sulfonated cement dispersant **D** is selected from poly(naphthalene sulfonates), poly(melamine sulfonates), polystyrene sulfonates, sulfonated phenolic resins, and sulfonated polycarboxylate ethers.

3. The admixture as claimed in any of the previous claims, **characterized in that** the at least one set retarder **S** is selected from the group consisting of sugar acids, sugars, sugar alcohols, low molecular weight carboxylic acids, hydroxycarboxylic acids, phosphates, phosphonates, borates, and amines.

4. The admixture as claimed in any of the previous claims, **characterized in that** the weight ratio of the at least one sulfonated cement dispersant **D** to the at least one set retarder **S** is between 10:1 and 1:1, preferably between 10:1 and 1:1, more preferably between 10:1 and 2:1, still more preferably between 7:1 and 3:1, especially between 6:1 and 3:1.

5. Use of an admixture as claimed in any of claims 1 - 4 to improve the workability of calcium sulfoaluminate cement or of a construction composition comprising calcium sulfoaluminate cement.

6. The use as claimed in claim 5, **characterized in that** the admixture is dosed in an amount to yield a weight ratio of 0.01 - 10 w%, preferably 0.1 - 5 w%, more preferably 0.2 - 2 w%, of the at least one sulfonated cement dispersant **D,** and of 0.005 - 1.5 w%, preferably 0.01 - 1 w% of the at least one set retarder **S,** in each case relative to the total dry weight of the calcium sulfoaluminate cement.

7. A construction composition comprising calcium sulfoaluminate cement and comprising an admixture as claimed in any of claims 1 - 4.

8. The construction composition as claimed in claim 7, **characterized in that** the at least one sulfonated cement dispersant **D** is present in an amount of between 0.01 - 10 w%, preferably 0.1 - 5 w%, more preferably 0.2 - 2 w%, and the at least one set retarder **S** is present in an amount of 0.005 - 1.5 w%, preferably 0.01 - 1 w%, in each case relative to the total dry weight of the calcium sulfoaluminate cement.

9. A construction method comprising the steps of
(i) providing a construction composition comprising calcium sulfoaluminate cement, at least one sulfonated cement dispersant **D,** and at least one set retarder **S** selected from the group consisting of calcium complexing agents, and
(ii) casting the construction composition provided in step (i) to form a construction element.

10. The method as claimed in claim 9, **characterized in that** the casting in step (ii) is done at a surrounding temperature of not more than 35 °C, preferably is done at a surrounding temperature of between 0 - 35 °C, more preferably 5 - 30 °C, still more preferably 10 - 27 °C.

11. The method as claimed in any of claims 9 or 10, **characterized in that** the construction composition provided in step (i) is a calcium sulfoaluminate cement obtained by intergrinding calcium sulfoaluminate clinker with at least one sulfonated cement dispersant **D** and at least one set retarder **S** selected from the group consisting of calcium complexing agents.

12. The method as claimed in any of claims 9 or 10, **characterized in that** the construction composition provided in step (i) is a cement, mortar, or concrete obtained by admixing at least one sulfonated cement dispersant **D** and at least one set retarder **S** selected from the group consisting of calcium complexing agents to calcium sulfoaluminate cement or to a construction composition comprising calcium sulfoaluminate cement.

13. The method as claimed in any of claims 9 - 12, **characterized in that** the at least one sulfonated cement dispersant **D** is selected from poly(naphthalene sulfonates), poly(melamine sulfonates), polystyrene sulfonates, sulfonated phenolic resins, and sulfonated polycarboxylate ethers.

14. The method as claimed in any of claims 9 - 13, **characterized in that** the at least one set retarder **S** is selected from the group consisting of sugar acids, sugars, sugar alcohols, low molecular weight carboxylic acids, hydroxycarboxylic acids, phosphates, phosphonates, borates, and amines.

15. A construction element obtained by curing a construction composition as claimed in any of claims 7 - 8 or obtained by a method as claimed in any of claims 9 - 14.
